# EUROPEAN PATENT SPECIFICATION

(11) **EP 4 265 939 B1**
(45) Date of publication and mention of the grant of the patent: **03.09.2025**
(21) Application number: 22382379.0
(22) Date of filing: 22.04.2022
(51) Int. Cl.: F16H 57/08, F03D 15/10, F03D 80/70, F16C 17/10, F16C 3/02, F16C 17/02, F16C 17/04, F16C 17/26

(54) **PLANETARY GEAR STAGE FOR A GEARBOX**
PLANETENGETRIEBESTUFE FÜR EIN GETRIEBE
ÉTAGE D'ENGRENAGE PLANÉTAIRE POUR UNE BOÎTE DE VITESSES

(43) Date of publication of application: 25.10.2023
(73) Proprietor: Siemens Gamesa Renewable Energy Innovation & Technology S.L., 31621 Sarriguren (Navarra) (ES)
(72) Inventor: SAENZ DE UGARTE SEVILLA, Patrik, 48940 Leioa (Bizkaia) (ES)
(74) Representative: SGRE-Association

(56) References cited:
- EP-B1- 2 847 497
- US-A1- 2018 306 247
- US-A1- 2019 136 944

## Description

### TECHNICAL FIELD

The present invention relates to a planetary gear assembly for a gearbox, preferably for a gearbox of a wind turbine.

### BACKGROUND OF THE INVENTION

The gearbox of a wind turbine needs to be as competitive as possible in order to allow the wind business to be profitable. Two main aspects of being competitive are related to weight saving and overall dimension of the gearbox, that require especial transportation if the gearbox does not fit within standard transportation means.

The use of journal bearings in planetary stages of a gearbox allows weight saving, and a small overall dimension compared with traditional roller bearings.

In order to cope with radial forces the journal bearing always has a radial bushing, being this radial bushing cylindrical or tapered. When the cylindrical bushing is used, an extra thrust washer is needed in order to bear axial loads, whereas tapered bearings can withstand axial and radial loads, so that no thrust washer is required.

However, the manufacture of tapered bushings is complex because it is very difficult to control the accuracy of a tapered machined surface.

There is an increasing need for providing bearings for planet gears that have minimal shaft diameter and high mechanical load capacity. Furthermore, a planet gear arrangement should be easy to assemble and cost-effective to produce. These demands are increasingly sought in the field of gearing systems, in particular planetary gears for wind power plants.

The US patent application US 2019/136944 A1, refers to a planet wheel assembly including a planet shaft, a planet wheel having radial contact surfaces and axial contact surfaces, bushings connected to the planet shaft, radial sliding elements between radial contact surfaces of the bushings and the radial contact surfaces of the planet wheel, and axial sliding elements between axial contact surfaces of the bushings and the axial contact surfaces of the planet wheel.

The European patent EP 2847497 B1 discloses a planetary gear stage for a gearbox. The planetary gear stage comprises a ring gear, a sun gear and a planet carrier for driving at least three planet shafts each onto which at least one planet gear having a radial contact surface and an axial contact surface is rotatably mounted by means of a plain bearing arrangement.

The US patent application US 2018/306247 A1 describes a plain bearing assembly of a rotational element on a bearing bolt includes a bearing bolt, a bearing sleeve, which is non-rotatably mounted on said bolt and which comprises a first radial bearing surface formed on its outer periphery, and a rotational element which is rotatably mounted on the bearing sleeve and which is mounted on the first radial bearing surface via a second radial bearing surface in such a way that it can slide.

### SUMMARY OF THE INVENTION

An object of the invention is the provision of a planetary gear stage, preferably for a gearbox of a wind turbine, that features a reduced weight and reduced manufacturing cost, and that exhibits compact design such that its outer dimensions allow the gearbox to fit within certain dimensions required for standard transportation.

Therefore, an aspect of the invention refers to a planetary gear stage, according to claim 1, for a gear box, wherein the gear stage comprises a planet shaft, and at least one plain or radial bushing coaxially coupled with the planet shaft.

The gear stage further comprises a planet gear rotatably mounted on the plain bushing, such that the plain bushing radially supports the planet gear, that is, the plain bushing is radially loaded by the planet gear.

The planet gear has an annular abutment projecting inwardly, that is, towards the planet shaft, such that the planet gear and the plain busing are axially in contact in at least one axial direction, either directly or indirectly, by means of the annular abutment, so that, the plain bushing is also axially loaded by the planet gear in one axial direction.

According to claim 1, the at least one plain bushing is a cylindrical body having a wall of constant thickness, and the axial length of the plain bushing is shorter than the axial length of the planet gear. The plain bushing has two end edges, and the annular abutment overlaps with one of the end edges of the plain bushing, therefore, the plain bushing does not extend in the space between the annular abutment and the planet shaft.

Preferably, the annular abutment has a rectangular cross-sectional shape.

According to claim 1, the planetary gear comprises a single plain bushing formed as one piece unitary body, and the annular abutment is formed at one end of the planet gear.

The gear stage may include a thrust washer interposed in between the plain bushing and the annular abutment. Alternatively, the plain bushing and the annular abutment are directly in contact, that is, without the interposition of any solid object.

In the above-described embodiments, the bushing can be small enough to achieve the desired weight saving, cost saving and small outside dimensions as opposed to traditional roller bearings.

The radial bushings in addition to withstand radial loads, according to the invention, also withstand axial loads due to the contact with the radial abutment of the planet gear and the bushings. Since axial loads are normally a lot smaller than radial loads, the material and design of the plain bushing is selected to withstand only small loads.

An advantage of having the single bushing loaded axially, is the cost saving because there is no need to have big thrust washers at both sides of the planet gear.

Additionally, there is no need to drill holes in the planet carrier during the manufacturing process, to attach the big thrust washers, especially in the rotor side, where it must be done manually or with very expensive tooling.

The main advantage of the invention compared with tapered bushings, is that, with the planetary gear stage of the present invention, there is no need to machine tapered surfaces.

Another aspect of the invention refers to a gearbox for a wind turbine, wherein the gearbox comprises a planet carrier, and two or more planetary gear stages as the one previously defined, which are supported by the planet carrier.

Additionally, the gearbox may comprise a thrust washer interposed in between one side of the planet gear and the planet carrier main body.

In an exemplary embodiment, the annular abutment is located at the end of the planet gear adjacent or closest to the planet carrier main body.

The gearbox may comprise a retaining ring coaxially mounted on the planet shaft, and interposed in between the plain bushing and a side wall of the planet carrier opposite the main body.

Another aspect of the invention refers to a wind turbine including the gearbox previously defined.

In the present disclosure, the term axial, axially or coaxial refer to the direction of the rotation axis of the planet shaft, or a direction parallel to that rotation axis.

These and other advantages and features of the invention will become apparent in view of the figures and detailed description of the invention.

### BRIEF DESCRIPTION OF THE DRAWINGS

Figure 1.- shows a longitudinal cross-section of a schematic representation of a planetary gear stage according to the invention, wherein Figure 1A is an embodiment with only one bushing and without thrust washer, and Figure 1B is similar embodiment but including a thrust washer. Since, the planetary gear stage, considering only its main components, is a symmetric assembly, for the sake of simplicity of the illustration, only one half of it has been drawn.
Figure 2.- shows a similar representation than Figure 1, i.e. an alternative embodiment with two plain bushings instead of a single plain bushing. This alternative embodiment does not fall within the wording of claim 1. Figure 2A without thrust washers, and Figure 2B including thrust washers.
Figure 3.- shows a schematic representation of a wind turbine including a gearbox.

### DESCRIPTION OF PREFERERED EMBODIMENTS OF THE INVENTION

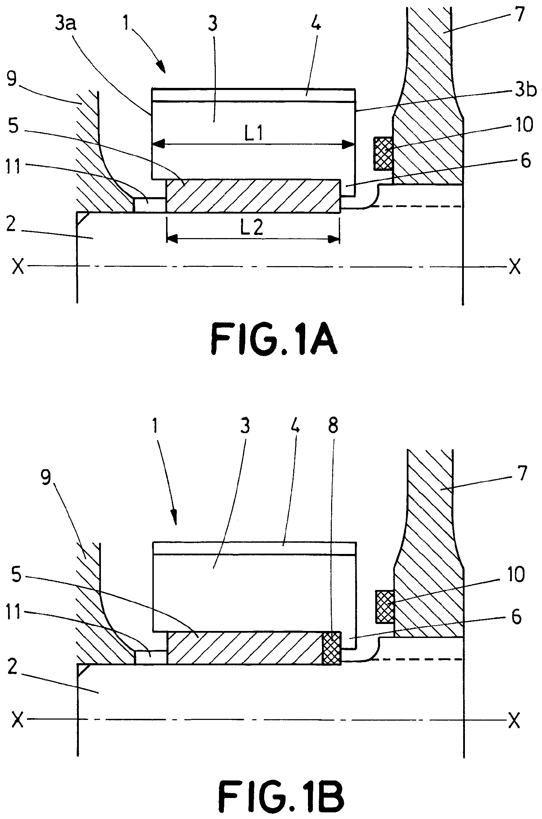

**Figure 1A** shows a planetary gear stage (1) for a gear box, wherein the gear stage (1) comprises a planet shaft (2) having a rotation axis (X), and a single plain or radial bushing (5) coaxially coupled and fixed to the planet shaft (2), and a planet gear (3) having a toothing (4) rotatably mounted on the plain bushing (5), such that the plain bushing (5) radially supports the planet gear (3), that is, the plain bushing (5) is radially loaded by the planet gear (3).

The planet gear (3) has a first end surface (3a) and a second end surface (3b), and the planet gear (3) is formed with an annular abutment (6) projecting inwardly (towards the planet shaft (2)), from one of the end surfaces, in this case from the end surface (3b) that is closest to a planet carrier main body (7) of a gearbox when the gear stage (1) is assembled in a gearbox.

Therefore, the planet gear (3) and the plain busing (5) are directly in contact (without any component being interposed in between) by means of the annular abutment (6), so that, the plain busing (5) is axially loaded by the planet gear (3) in one axial direction.

The single plain bushing (5) is a cylindrical body having a wall of constant thickness. As shown in **Figures 1A** and **1B****,** the axial length of the plain bushing (5) (L2) is shorter than the axial length (L1) of the planet gear (3), and the plain bushing (5) does not extend in between the internal surface of the abutment (6) and the shaft (2).

The plain bushing (3) has two end edges, and the annular abutment (6) overlaps with one of the end edges of the plain bushing, in this case with the end edge of the plain bushing (3) that is closest to the planet carrier main body (7).

In the alternative embodiment of **Figure 1B****,** a first thrust washer (8) is interposed between the plain bushing (5) and the annular abutment (6), so that, the plain bushing (5) and the annular abutment (6) are not directly in contact, but in contact through the first thrust washer (8).

A gearbox for a wind turbine, is also partially represented in **Figures 1A** and **1B****,** and comprises two or more planetary gear stages (1) as the one previously defined, and a planet carrier having a planet carrier main body (7) and a side wall (9), such that the planetary gear stages (1) are supported by the planet carrier.

A second thrust washer (10) is interposed between the end surface (3b) of the planet gear (3) having the annular abutment (6), and the planet carrier main body (7). In particular, the second thrust washer (10) is assembled with the planet carrier main body (7).

A retaining ring (11) is coaxially mounted on the planet shaft (6), and interposed and in contact in between the plain bushing (5) and a side wall (9) of the planet carrier, as to retain axially the plain bushing (5).

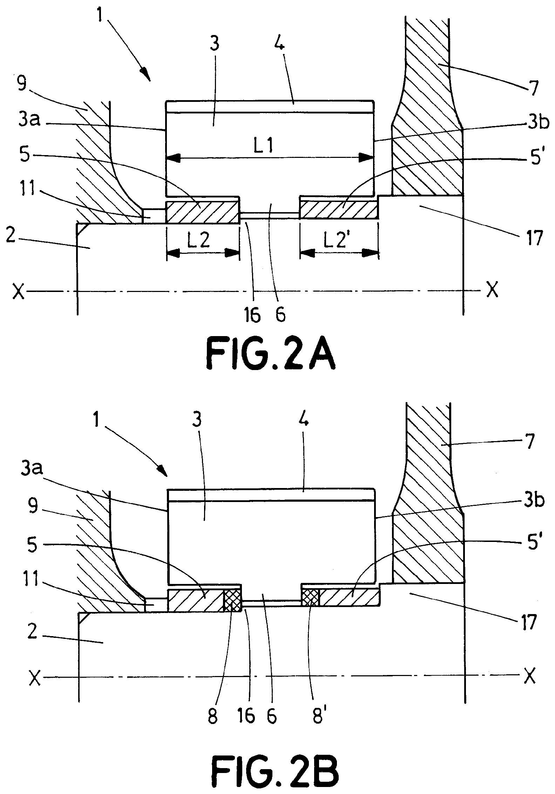

In the alternative embodiment of **Figure 2A****,** which does not fall within the wording of claim 1, the planetary gear stage (1) comprises two plain bushings (5,5') also formed as cylindrical bodies, and the annular abutment (6) is located at a central region of the planet gear (3) in between the two ends (3a,3b) of the planet gear (3).

A first plain bushing (5) is placed at one side of the annular abutment (6), and a second plain bushing (5') is placed at the other side of the annular abutment (6).

Also in this embodiment, the axial length (L2, L2') of any of the two plain bushings (5,5'), is shorter than the axial length (L1) of the planet gear (3), such that, none of the plain bushings (5,5') extends in between the internal surface of the annular abutment (6) and the shaft (2).

In the embodiment of **Figure 2A****,** which does not fall within the wording of claim 1, the plain bushings (5,5') are axially directly in contact with the annular abutment (6).

In the alternative embodiment of **Figure 2B****,** which does not fall within the wording of claim 1, two thrust washers (8,8') are provided and arranged such that each one is interposed between a plain bushing (5,5') and the annular abutment (6).

A gearbox incorporating the planetary gear stage of **Figures 2A,** and **2B****,** also includes a retaining ring (11) coaxially mounted on the planet shaft (6), and interposed in between one of the plain bushing (5) and a side wall (9) of the planet carrier. However, in this case, there is no thrust washer interposed between the planet carrier main body (7) and the planet gear (3).

It can be noted that in all the embodiments shown in the figures, the annular abutment (6) has a rectangular cross-sectional shape.

Furthermore, in the embodiments of **Figures 2A, 2B****,** the planet shaft (2) has a radial widening (16) and a shoulder (17), such that, the first plain bushing (5) is retained between the retaining ring (11) at one of its ends, and the annular abutment (6) and the radial widening (16) at its other end, either directly or through the first thrust washer (8).

The second plain bushing (5') is retained between the annular abutment (6) and the shoulder (17), either directly or through the first thrust washer (8).

Additionally, the second plain bushing (5') is thinner than the first plain bushing (5).

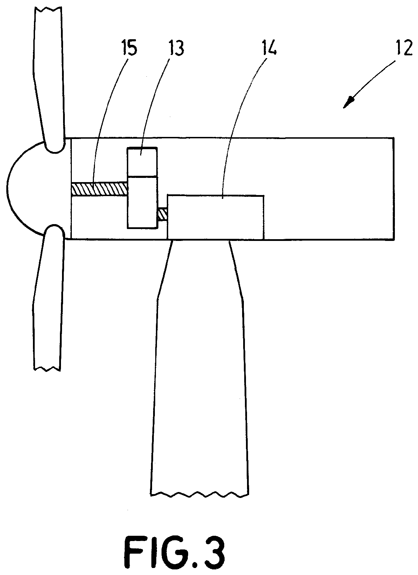

**Figure 3** shows a wind turbine (12) including a gearbox (13) according to the invention as claimed in claim 10 incorporating the planetary gear stage defined in claim 1, and mechanically coupled to a main shaft (15) of the wind turbine (12), and with an electric power generator (14) is a known manner.

## Claims

1. A planetary gear stage (1) for a gear box (13), the planetary gear stage (1) comprising:
a planet shaft (2),
a single plain bushing (5) coaxially coupled with the planet shaft (2),
a planet gear (3) rotatably mounted on the plain bushing (5), such that the plain bushing (5) radially supports the planet gear (3), and
wherein the planet gear (3) has an annular abutment (6) projecting inwardly towards the planet shaft (2), such that the planet gear (3) and the plain bushing (5) are axially in contact in at least one axial direction, either directly or indirectly, by means of the annular abutment (6) and
wherein the plain bushing (5) is a cylindrical body, and
wherein the axial length (L2) of the plain bushing (5) is shorter than the axial length of the planet gear (3) and
wherein the plain bushing (5) is formed as a one piece unitary body,
and wherein the annular abutment (6) is formed at one end of the planet gear (3).

2. A planetary gear stage (1) according to claim 1, wherein the plain bushing (5) has two end edges, and wherein the annular abutment (6) overlaps with one of the end edges of the plain bushing (5).

3. A planetary gear stage (1) according to claim 1, further comprising a thrust washer (8) coaxial with the planet shaft (2), and interposed in between the plain bushing (5) and the annular abutment (6).

4. A planetary gear stage (1) according to claim 1, wherein the plain bushing (5) and the annular abutment (6) are directly in contact.

5. A planetary gear stage (1) according to any of the preceding claims, wherein the annular abutment (6) has a rectangular cross-sectional shape.

6. A gearbox (13) for a wind turbine (12), comprising a planet carrier main body (7), and two or more planetary gear stages (1) as the one defined in any of the preceding claims, supported by the planet carrier main body (7).

7. Gearbox (13) according to claim 6, comprising a thrust washer (10) interposed in between one side the planet gear (3) and the planet carrier main body (7).

8. Gearbox (13) according to claim 7, wherein the annular abutment (6) is located at the end (3b) of the planet gear (3) closest to the planet carrier main body (7).

9. Gearbox (13) according to any of the claims 6 to 8, further comprising a retaining ring (11) coaxially mounted on the planet shaft (6), and interposed and in contact between the plain bushing (5) and a side wall (9) of the planet carrier, as to retain axially the plain bushing (5).

10. A wind turbine (12) including the gearbox (13) defined in any of the claims 6 to 9.

## Patentansprüche

1. Planetengetriebestufe (1) für ein Getriebe (13), wobei die Planetengetriebestufe (1) Folgendes umfasst:
eine Planetenwelle (2),
eine einzelne, koaxial mit der Planetenwelle (2) gekoppelte Gleitbuchse (5),
ein Planetenrad (3), das drehbar an der Gleitbuchse (5) montiert ist, so dass die Gleitbuchse (5) das Planetenrad (3) radial stützt, und
wobei das Planetenrad (3) ein nach innen zu der Planetenwelle (2) vorstehendes ringförmiges Widerlager (6) aufweist, so dass das Planetenrad (3) und die Gleitbuchse (5) mittels des ringförmigen Widerlagers (6) und in mindestens einer axialen Richtung, entweder direkt oder indirekt, axial in Kontakt stehen und
wobei die Gleitbuchse (5) ein zylindrischer Körper ist und
wobei die axiale Länge (L2) der Gleitbuchse (5) kürzer als die axiale Länge des Planetenrads (3) ist und
wobei die Gleitbuchse (5) als ein einteiliger einstückiger Körper ausgebildet ist und wobei das ringförmige Widerlager (6) an einem Ende des Planetenrads (3) ausgebildet ist.

2. Planetengetriebestufe (1) nach Anspruch 1, wobei die Gleitbuchse (5) zwei Endränder aufweist und wobei das ringförmige Widerlager (6) mit einem der Endränder der Gleitbuchse (5) überlappt.

3. Planetengetriebestufe (1) nach Anspruch 1, ferner umfassend eine Druckscheibe (8), die koaxial zu der Planetenwelle (2) ist und zwischen der Gleitbuchse (5) und dem ringförmigen Widerlager (6) angeordnet ist.

4. Planetengetriebestufe (1) nach Anspruch 1, wobei die Gleitbuchse (5) und das ringförmige Widerlager (6) direkt in Kontakt stehen.

5. Planetengetriebestufe (1) nach einem der vorhergehenden Ansprüche, wobei das ringförmige Widerlager (6) eine rechteckige Querschnittsform aufweist.

6. Getriebe (13) für eine Windkraftanlage (12), umfassend einen Planetenträgerhauptkörper (7) und zwei oder mehr Planetengetriebestufen (1) wie die nach einem der vorhergehenden Ansprüche, die durch den Planetenträgerhauptkörper (7) gestützt werden.

7. Getriebe (13) nach Anspruch 6, umfassend eine Druckscheibe (10), die zwischen einer Seite des Planetenrads (3) und dem Planetenträgerhauptkörper (7) angeordnet ist.

8. Getriebe (13) nach Anspruch 7, wobei das ringförmige Widerlager (6) an dem dem Planetenträgerhauptkörper (7) nächstgelegenen Ende (3b) des Planetenrads (3) angeordnet ist.

9. Getriebe (13) nach einem der Ansprüche 6 bis 8, ferner umfassend einen Haltering (11), der koaxial an der Planetenwelle (6) montiert und zwischen der Gleitbuchse (5) und einer Seitenwand (9) des Planetenträgers angeordnet und in Kontakt damit ist, um die Gleitbuchse (5) axial zu halten.

10. Windkraftanlage (12), aufweisend das Getriebe (13) nach einem der Ansprüche 6 bis 9.

## Revendications

1. Étage d'engrenage planétaire (1) pour une boîte de vitesses (13),
l'étage d'engrenage planétaire (1) comprenant : un arbre satellite (2), une seule douille lisse (5) couplée de manière coaxiale à l'arbre satellite (2),
un engrenage satellite (3) monté de manière rotative sur la douille lisse (5), de telle sorte que la douille lisse (5) soutient de manière radiale l'engrenage satellite (3), et
dans lequel l'engrenage satellite (3) présente une butée annulaire (6) faisant saillie vers l'intérieur en direction de l'arbre satellite (2), de telle sorte que l'engrenage satellite (3) et les douilles lisses (5) soient en contact de manière axiale dans au moins une direction axiale, soit directement, soit indirectement, au moyen de la butée annulaire (6) et
dans lequel la douille lisse (5) est un corps cylindrique, et dans lequel la longueur axiale (L2) de la douille lisse (5) est plus courte que la longueur axiale de l'engrenage satellite (3) et
dans lequel la douille lisse (5) est formée comme une pièce d'un seul tenant, et
dans lequel la butée annulaire (6) est formée au niveau d'une extrémité de l'engrenage satellite (3).

2. Étage d'engrenage planétaire (1) selon la revendication 1, dans lequel la douille lisse (5) présente deux bords d'extrémité, et dans lequel la butée annulaire (6) chevauche l'un des bords d'extrémité de la douille lisse (5).

3. Étage d'engrenage planétaire (1) selon la revendication 1, comprenant en outre une rondelle de butée (8) coaxiale à l'arbre satellite (2), et interposée entre la douille lisse (5) et la butée annulaire (6).

4. Étage d'engrenage planétaire (1) selon la revendication 1, dans lequel la douille lisse (5) et la butée annulaire (6) sont directement en contact.

5. Étage d'engrenage planétaire (1) selon l'une quelconque des revendications précédentes, dans lequel la butée annulaire (6) présente une forme de section transversale rectangulaire.

6. Boîte de vitesses (13) pour une éolienne (12), comprenant un corps principal de porte-satellite (7) et deux étages d'engrenages planétaires (1) ou plus, comme celui défini dans l'une quelconque des revendications précédentes, soutenus par le corps principal de porte-satellite (7).

7. Boîte de vitesses (13) selon la revendication 6, comprenant une rondelle de butée (10) interposée entre un côté de l'engrenage satellite (3) et le corps principal du porte-satellite (7).

8. Boîte de vitesses (13) selon la revendication 7, dans laquelle la butée annulaire (6) est située au niveau de l'extrémité (3b) de l'engrenage satellite (3) la plus proche du corps principal du porte-satellite (7).

9. Boîte de vitesses (13) selon l'une quelconque des revendications 6 à 8, comprenant en outre un anneau de retenue (11) monté de manière coaxiale sur l'arbre satellite (6), et interposé en contact entre la douille lisse (5) et une paroi latérale (9) du porte-satellite, de manière à retenir de manière axiale la douille lisse (5).

10. Éolienne (12) comportant la boîte de vitesses (13) définie selon l'une quelconque des revendications 6 à 9.
